# EUROPÄISCHE PATENTANMELDUNG

(11) **EP 1 310 639 A1**
(43) Veröffentlichungstag der Anmeldung: **14.05.2003**
(21) Anmeldenummer: 02020995.3
(22) Anmeldetag: 20.09.2002
(51) Int. Cl.: F01M 13/02, F02M 25/06

(54) **Kurbelgehäuseentlüftung für eine Brennkraftmaschine mit Abgasturboaufladung**

(30) Priorität: 07.11.2001 DE 10154666
(71) Anmelder: Dr.Ing. h.c.F. Porsche Aktiengesellschaft, 70435 Stuttgart (DE)
(72) Erfinder: Gschwindt, Werner, 75447 Sternenfels (DE); Reustle, Albrecht, 74399 Walheim (DE); Wasserbäch, Thomas, 75210 Keltern (DE); Wunsch, Thorsten, 71299 Wimsheim (DE)

(57) **Zusammenfassung**

Die Erfindung betrifft eine Kurbelgehäuseentlüftung für eine Brennkraftmaschine mit Abgasturboaufladung, mit einer ersten Entlüftungsleitung (30), die auf der einen Seite mit dem Kurbelgehäuseraum und auf der anderen Seite mit einem Saugrohr (8) der Brennkraftmaschine verbunden ist, wobei die Entlüftungsleitung (30) in Strömungsrichtung gesehen hinter einer im Saugrohr (8) angeordneten Drosselklappe einmündet, sowie mit einer zweiten Entlüftungsleitung (40), die auf der einen Seite mit dem Kurbelgehäuseraum und auf der anderen Seite mit der Ansaugseite eines Verdichters (14, 16) verbunden ist und daß in der ersten Entlüftungsleitung (30) ein Rückschlagventil (34) angeordnet ist, das im Ladedruckbetrieb der Brennkraftmaschine verhindert, daß der im Saugrohr (10) herrschende Überdruck in den Kurbelgehäuseraum übertritt. Es wird vorgeschlagen, daß in der zweiten Entlüftungsleitung (40) ein Rückschlagventil (42) angeordnet ist und daß das Unterdruckniveau für beide Entlüftungsleitungen (30, 40) über einen gemeinsamen Druckregler (38) einstellbar ist. Damit wird bei der Kurbelgehäuseentlüftung sowohl im Ladedruckbetrieb als auch im Saugbetrieb der Brennkraftmaschine sichergestellt, daß der Unterdruck im Kurbelgehäuseraum einstellbar ist und im Saugbetrieb der Brennkraftmaschine keine Bypassluft über die Ansaugseite des Verdichters hinter die Drosselklappe gelangt.

## Beschreibung

Die Erfindung betrifft eine Kurbelgehäuseentlüftung für eine Brennkraftmaschine mit Abgasturboaufladung nach dem Oberbegriff des Patentanspruchs 1.

Aus der DE 199 29 876 A1 ist eine Kurbelgehäuseentlüftung für eine Brennkraftmaschine mit Abgasturboaufladung bekannt, bei der zwei Kurbelgehäuse-Entlüftungswege vorgesehen sind. Im Teillastbetrieb bzw. im Saugbetrieb der Brennkraftmaschine wird über eine erste Entlüftungsleitung, die vom Kurbelgehäuseraum zum Saugrohr der Brennkraftmaschine führt, sichergestellt, daß die bei der Verbrennung entstehenden sogenannten blow-by-Gase aus dem Kurbelgehäuseraum zur Sauganlage der Brennkraftmaschine zurückgeführt werden. Ist der Abgasturbolader aktiv bzw. befindet sich die Brennkraftmaschine im Ladedruckbetrieb, so wird über eine zweite Entlüftungsleitung, die an der Saugseite des Verdichters angeschlossen ist, ebenfalls sichergestellt, daß die blow-by-Gase über den Verdichter im geschlossenen Kreislauf der Verbrennung wieder zugeführt werden. Die Entlüftungsleitungen sind weiterhin mit Drosseln versehen, über die ein bestimmtes Unterdruckniveau eingestellt wird.

Demgegenüber ist es Aufgabe der Erfindung, die Kurbelgehäuseentlüftung für eine Brennkraftmaschine mit Abgasturboaufladung dahingehend zu verbessern, daß einerseits das erforderliche Unterdruckniveau in den Entlüftungsleitungen besser einstellbar ist und daß verhindert wird, daß im Saugbetrieb der Brennkraftmaschine über eine zur Saugseite des Verdichters führende Entlüftungsleitung Bypassluft hinter die im Saugrohr angeordnete Drosselklappe geführt wird. Dies hätte Probleme mit der Abstimmung der Leerlaufregelung zur Folge, da bei der Stellung der Drosselklappe diese Bypassluft nicht berücksichtigt ist.

Erfindungsgemäß wird diese Aufgabe durch die Merkmale des Patentanspruchs 1 gelöst.

Die aus dem Stand der Technik in den Kurbelgehäuse-Entlüftungsleitungen einer aufgeladenen Brennkraftmaschine vorgesehenen Drosseln werden durch einen für beide Entlüftungsleitungen vorgesehenen gemeinsamen Druckregler ersetzt. Damit besteht die Möglichkeit, in der zweiten Entlüftungsleitung, die für den Ladedruckbetrieb vorgesehen ist, ein Rückschlagventil anzuordnen, das verhindert, daß im Saugbetrieb der Brennkraftmaschine über die zweite Entlüftungsleitung eine hinter die Drosselklappe einströmende Teilluftmenge zur Verbrennung gelangt.

Die vorgeschlagene erfindungsgemäße Kurbelgehäuseentlüftung stellt darüber hinaus sicher, daß bei einer Vereisung der zum Saugrohr führenden Entlüftungsleitung, die einen Überdruckaufbau im Kurbelraum aufgrund fehlender Entlüftung zur Folge hätte, sich der Überdruck über das in der zweiten Entlüftungsleitung angeordnete Rückschlagventil abbauen kann (Sicherheitsfunktion).

Weitere, die Erfindung ausgestaltende Merkmale sind in den Unteransprüchen enthalten.

Der für beide Entlüftungsleitungen vorgesehene gemeinsame Druckregler ist auf vorteilhafte Art und Weise in einem für beide Entlüftungsleitungen vorgesehenen gemeinsamen Entlüftungsleitungsabschnitt angeordnet.

Damit die ölhaltigen Bestandteile der aus dem Kurbelgehäuseraum abgeführten blow-by-Gase abgeschieden werden können, bevor sie über die Sauganlage der Brennkraftmaschine wieder der Verbrennung zugeführt werden, ist in dem Entlüftungsleitungsabschnitt ein Ölabscheider vorgesehen.

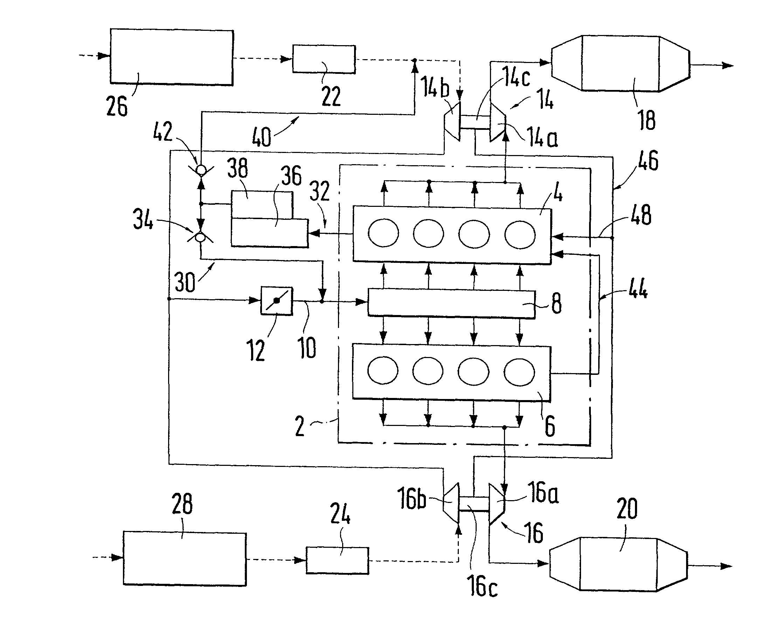

In der einzigen Figur ist schematisch das Prinzip der Kurbelgehäuseentlüftung für eine aufgeladene Brennkraftmaschine dargestellt, das anhand eines Ausführungsbeispiels der Erfindung nachstehend näher beschrieben ist.

Mit dem Bezugszeichen 2 ist schematisch der Motorblock eines V8-Biturbomotors dargestellt. Der Motorblock 2 weist zwei Zylinderbankreihen auf, von denen schematisch nur die den Motorblock abschließenden Zylinderkopfdeckel 4 und 6 dargestellt sind. Beide Zylinderbankreihen werden über eine gemeinsame Sauganlage 8 mit Verbrennungsluft versorgt. Der Sauganlage 8 ist ein Saugrohr 10 (nur schematisch als Pfeil dargestellt) vorgeschaltet, in dem auf bekannte Art und Weise eine zur Regulierung der Verbrennungsluftmenge vorgesehene Drosselklappe 12 angeordnet ist. Die Brennkraftmaschine ist mit zwei Abgasturboladern bzw. Verdichtern 14 und 16 ausgestattet, die durch den bei der Verbrennung erzeugten Abgasstrom angetrieben sind und somit im Ladedruckbetrieb verdichtete Verbrennungsluft der Sauganlage zuführen. Die beiden Abgasturbolader 14 und 16 bestehen dabei im wesentlichen aus einem Turbinenrad 14a, 16a und einem Verdichterrad 14b, 16b, die durch eine Welle 14c, 16c miteinander verbunden sind. Den beiden Abgasturboladern 14 und 16 sind auf der Abgasseite zwei Katalysatoren 18 und 20 nachgeschaltet, während auf der Ansaugseite jeweils ein Luftmassenmesser 22 und 24, sowie ein Luftfilter 26 und 28 vorgeschaltet ist.

Zur Entlüftung der bei der Verbrennung bzw. bei der Verdichtung im Kurbelgehäuseraum entstehenden blow-by-Gase ist eine erste Entlüftungsleitung 30 vorgesehen, die auf der einen Seite über ein Entlüftungsleitungsabschnitt 32 mit dem Zylinderkopfdeckel 4 verbunden ist und mit ihrem anderen Ende im Saugrohr 10 der Brennkraftmaschine zwischen Drosselklappe 12 und Sauganlage 8 einmündet. Der den Zylinderkopfraum abschließende Zylinderkopfdeckel 4, 6 ist über nicht dargestellte Entlüftungswege mit dem Kurbelgehäuseraum der Brennkraftmaschine verbunden. In der ersten Entlüftungsleitung 30 ist ein Rückschlagventil 34 angeordnet, dessen Funktion später noch näher beschrieben ist. Im Entlüftungsleitungsabschnitt 32 ist ein Ölabscheider 36 und ein Druckregler 38 angeordnet, dessen Funktionsweisen ebenfalls noch später näher erläutert sind.

Es ist eine zweite Entlüftungsleitung 40 vorgesehen, die auf der einen Seite auf der Ansaugseite des Verdichterrades 14b angeschlossen ist und auf der anderen Seite über den Entlüftungsleitungsabschnitt 32 ebenfalls über den Zylinderkopfdeckel 4 mit dem Kurbelgehäuseraum der Zylinderbankreihe verbunden ist. In der zweiten
Entlüftungsleitung 40 ist weiterhin ein zweites Rückschlagventil 42 angeordnet. Zwischen den beiden Zylinderkopfhauben 4 und 6 ist weiterhin eine Verbindungsleitung 44 vorgesehen, mit deren Hilfe die blow-by-Gase aus dem Zylinderkopfdeckel 6 in den Zylinderkopfdeckel 4 überführt werden.

Bei der Kurbelgehäuseentlüftung für eine Brennkraftmaschine mit Abgasturboaufladung wird zwischen zwei Betriebszuständen der Brennkraftmaschine unterschieden. Im Teillastbereich, bei dem der Abgasturbolader 14, 16 noch nicht aktiv ist, befindet sich der Motor im herkömmlichen Saugbetrieb, während sich der Motor im Ladedruckbetrieb befindet, wenn die Abgasturbolader 14, 16 durch den Abgasmassenstrom aktiviert sind.

Im folgenden wird die Kurbelgehäuseentlüftung in Abhängigkeit von diesen beiden Betriebszuständen der Brennkraftmaschine näher beschrieben.

Befindet sich die Brennkraftmaschine noch nicht im Ladedruckbetrieb, erfolgt die Kurbelgehäuseentlüftung über die erste Entlüftungsleitung 30, da der im Saugrohr 10 vorherrschende Unterdruck ausreicht, um die blow-by-Gase aus den Kurbelgehäuseräumen der beiden Zylinderbankreihen über die Zylinderkopfhauben 4 und 6, den Entlüftungsleitungsabschnitt 32, den Ölabscheider 36 und den Druckregler 38 der Sauganlage 8 wieder zuzuführen. Durch den Ölabscheider 36 können die ölhaltigen Bestandteile der blow-by-Gase abgeschieden werden, während der Druckregler 38 sicherstellt, daß im Kurbelgehäuseraum der beiden Zylinderbankreihen konstante und gfs. gegenüber den Unterdruckwerten im Saugrohr 10 reduzierte Unterdrücke vorliegen. Das in der zweiten Entlüftungsleitung 40 vorgesehene Rückschlagventil 42 stellt sicher, daß in diesem Betriebszustand keine Bypassluft über die zweite Entlüftungsleitung 40 in das Saugrohr 10 bzw. die Sauganlage 8 der Brennkraftmaschine gelangt.

Befindet sich die Brennkraftmaschine im Ladedruckbetrieb, so ist die zweite Entlüftungsleitung 40 aktiviert und der sich auf der Saugsseite des Verdichterrades 14b ausbildende Unterdruck wird genutzt, um die bei der Verbrennung entstehenden blow-by-Gase mit Hilfe der Entlüftungsleitung 40 auf die Ansaugseite des Verdichterrades 14b zurückzuführen. Der in dem Entlüftungsleitungsabschnitt 32 angeordnete Ölabscheider 36 sorgt wiederum dafür, daß die ölhaltigen Bestandteile der blow-by-Gase abgeschieden werden, während der Druckregler 38 in den beiden Kurbelgehäuseräumen einen einheitlichen konstanten Unterdruckwert einregelt. Durch das in der ersten Entlüftungsleitung 30 vorgesehene Rückschlagventil 34 ist sichergestellt, daß der im Saugrohr 10 bzw. der in der Sauganlage 8 herrschende Überdruck sich nicht auf die Kurbelgehäuseräume ausbreiten kann.

Die beiden Wellen 14c und 16c der Abgasturbolader 14 und 16 werden über sogenannte catch-tanks (nicht dargestellt) mit Schmieröl versorgt. Zur Entlüftung dieser an den Abgasturboladern vorgesehenen catch-tanks ist eine dritte Entlüftungsleitung 46 vorgesehen, die einerseits mit beiden catch-tanks verbunden ist und andererseits über eine Verbindungsleitung 48 an den Zylinderkopfdeckel 4 angeschlossen ist.

## Patentansprüche

1. Kurbelgehäuseentlüftung für eine Brennkraftmaschine mit Abgasturboaufladung, mit einer ersten Entlüftungsleitung, die auf der einen Seite mit dem Kurbelgehäuseraum und auf der anderen Seite mit einem Saugrohr der Brennkraftmaschine verbunden ist, wobei die Entlüftungsleitung in Strömungsrichtung gesehen hinter einer im Saugrohr angeordneten Drosselklappe einmündet, sowie mit einer zweiten Entlüftungsleitung, die auf der einen Seite mit dem Kurbelgehäuseraum und auf der anderen Seite mit der Ansaugseite eines Verdichters (Abgasturbolader) verbunden ist und daß in der ersten Entlüftungsleitung ein Rückschlagventil angeordnet ist, das im Ladedruckbetrieb verhindert, daß der im Saugrohr herrschende Überdruck in den Kurbelgehäuseraum übertritt, **dadurch gekennzeichnet, daß** in der zweiten Entlüftungsleitung (40) ein Rückschlagventil (42) angeordnet ist und daß das Unterdruckniveau für beide Entlüftungsleitungen (30, 40) über einen gemeinsamen Druckregler (38) einstellbar ist.

2. Kurbelgehäuseentlüftung nach Anspruch 1, **dadurch gekennzeichnet, daß** der Druckregler (38) in einem für beide Entlüftungsleitungen (30, 40) vorgesehenen Entlüftungsleitungsabschnitt (32) angeordnet ist.

3. Kurbelgehäuseentlüftung nach Anspruch 1 oder 2, **dadurch gekennzeichnet, daß** im Entlüftungsleitungsabschnitt (32) ein Ölabscheider (36) vorgesehen ist, der dem Druckregler (38) vorgeschaltet ist.
